# EUROPEAN PATENT SPECIFICATION

(11) **EP 3 168 193 B1**
(45) Date of publication and mention of the grant of the patent: **25.12.2019**
(21) Application number: 15819545.3
(22) Date of filing: 06.07.2015
(51) Int. Cl.: H01G 9/20, C01G 23/047, C09C 1/36, C09D 17/00

(54) **VISCOUS DISPERSION LIQUID AND METHOD FOR PRODUCING SAME AND POROUS SEMICONDUCTOR ELECTRODE SUBSTRATE**
VISKOSE DISPERSIONSFLÜSSIGKEIT UND VERFAHREN ZUR HERSTELLUNG DAVON UND PORÖSES HALBLEITERELEKTRODENSUBSTRAT
LIQUIDE DE DISPERSION VISQUEUX ET SON PROCÉDÉ DE PRODUCTION ET SUBSTRAT D'ÉLECTRODE SEMICONDUCTEUR POREUX

(30) Priority: 08.07.2014 JP 2014140227
(43) Date of publication of application: 17.05.2017
(73) Proprietor: Zeon Corporation, Tokyo 100-8246 (JP)
(72) Inventor: KOGURE, Hideo, Yokohama-shi Kanagawa 225-8502 (JP); AOYAMA, Kousuke, Yokohama-shi Kanagawa 225-8502 (JP); KISHIMOTO, Shinzo, Yokohama-shi Kanagawa 225-8502 (JP); IKEGAMI, Masashi, Yokohama-shi Kanagawa 225-8502 (JP)
(74) Representative: Maiwald Patent- und Rechtsanwaltsgesellschaft mbH
(86) International application number: PCT/JP2015/003390
(87) International publication number: WO 2016/006227

(56) References cited:
- JP-A- 2006 076 855
- JP-A- 2006 083 363
- JP-A- 2006 179 444
- US-A1- 2008 234 395
- US-A1- 2008 234 395
- MASANORI KAWANO ET AL.: 'Plastic Shikiso Zokan Taiyo Denchi no Kaihatsu (14) Ryushi Ketsugo ni Okeru Sanka Titanium Kesshokei no Eikyo' ABSTRACTS OF AUTUMN MEETING OF THE ELECTROCHEMICAL SOCIETY OF JAPAN vol. 2007, 19 September 2007, page 234, XP008185126

## Description

### TECHNICAL FIELD

This disclosure relates to a viscous dispersion liquid, a method of producing the viscous dispersion liquid, a porous semiconductor electrode substrate, and a dye-sensitized solar cell.

### BACKGROUND

Semiconductor nanoparticles represented by titanium dioxide nanoparticles are widely used as materials for ultrathin or porous films in the fields of photocatalysts, electronic devices such as condensers, capacitors and batteries, and energy such as fuel cells and solar cells. In the fields of photocatalysts, as photocatalytic materials, deposition materials containing titanium dioxide nanoparticles have been put into practice in the form of coating pastes or spray pastes for use as coating materials and surface modifying materials. Also in the fields of energy, development of power storage devices and dye-sensitized solar cells in which semiconductor nanoparticles, which have large specific areas, are used as electrode materials is gaining momentum. Dye-sensitized solar cells are low-cost solar cells replacing solid-state junction solar cells in which a silicon p-n junction or compound semiconductor heterojunction is used as the photovoltaic layer, and are of particular importance as the technology that utilizes porous films of semiconductor nanoparticles.

The fundamental technology of dye-sensitized solar cells is disclosed in NPL 1 and PTL 1. The dye-sensitized solar cell responds to visible light of up to 800 nm wavelength, and has already achieved energy conversion efficiency of 10% or more. Extensive studies are being made to develop such dye-sensitized solar cells that achieve an energy conversion efficiency of as high as 15% or more, a value far beyond that obtained by amorphous silicon solar cells.

Among different types of dye-sensitized solar cells, studies directed to colorful, highly transparent dye-sensitized solar cells, particularly film dye-sensitized solar cells that include a plastic substrate, are gaining momentum as dye-sensitized solar cells that have different characteristics than silicon solar cells. Manufacture of the conventional glass dye-sensitized solar cell involved application of a semiconductor nanoparticle-containing viscous dispersion liquid which contains a thickening binder followed by high-temperature (450°C or above) sintering to burn off the binder to deposit a semiconductor porous film onto the substrate. However, manufacture of a film dye-sensitized solar cell that includes a plastic substrate requires a deposition step at low temperatures. As methods for low-temperature deposition of a semiconductor porous film, which is required for the manufacture of such a film solar cell, methods that use electrophoresis have been proposed (NPL 2 and PTL 2). Another proposed method is the so-called press method wherein an electrode support is coated with a dispersion liquid of semiconductor microparticles followed by pressing to deposit a semiconductor porous film (PTL 3). These methods are capable of forming a semiconductor porous film at temperatures as low as 150°C or below, a range within which plastic substrates exhibit heat resistance, and of employing a roll-to-roll production scheme used in the fields of printing, and therefore have the advantage of the possibility of manufacturing solar cells at low costs.

However, solar cells that include an electrode manufactured using the above-described semiconductor nanoparticle-containing viscous dispersion liquid containing a thickening binder and using low-temperature deposition suffer from a drawback of low energy conversion efficiency of on the order of 1% to 3%, a value smaller than those of solar cells including a glass electrode manufactured using the conventional sintering method.

The reason for this is that while the conventional high-temperature sintering step can completely remove impurities derived from raw materials, low-temperature deposition methods such as the press method cannot completely remove these impurities. Specifically, low-temperature deposition methods involve unwanted incorporation of insulating materials-impurities (many of which are organic materials) present in the dispersion medium of semiconductor particles and/or organic materials such as binders which have been added in trace amounts for deposition-into a semiconductor porous film, resulting solar cells exhibiting reduced energy conversion efficiency. Accordingly, it is strongly requested that in the low-temperature deposition method, incorporation of polymers used as the binder material as well as organic impurities be reduced to a certain level or less, so that a substantially binder-free, highly pure dye-sensitized semiconductor film is formed for the manufacture of a lightweight, large area film solar cell.

Binder-free semiconductor nanoparticle-containing dispersion liquids used for low-temperature deposition (hereinafter occasionally referred to as "binder-free, low-temperature deposition pastes) disclosed heretofore come in coating pastes (PTL 4 and PTL 5) and spray pastes (PTL 6), for example. PTL 7 discloses a viscous dispersion comprising crystalline semiconductor nanoparticles dispersed in a dispersion medium, wherein the dispersion medium is a mixture comprising 53 to 92 wt % of a hydrophilic organic medium and 8 to 47 wt % of water, said hydrophilic organic medium comprising an alcohol having 3 to 5 carbon atoms as a main component, wherein the dispersion medium essentially does not contain an organic binder, an amount of said organic binder being less than 2 wt % of the medium, and wherein the dispersion comprises 8 to 40 wt % of the dispersed crystalline semiconductor nanoparticles based on the total amount of the dispersion. On the other hand, for precise formation of a semiconductor porous film, it is desirable to use coating methods such as screen printing, metal masking, or gravure printing, in particular screening printing. However, no binder-free, low-temperature deposition pastes have been disclosed that are amenable to these coating methods that may achieve precise formation of semiconductor porous films.

### CITATION LIST

### Patent Literature

PTL 1: US Pat. No. 4,927,721
PTL 2: JP 2002-100416 A
PTL 3: WO2000/072373 A
PTL 4: JP 2006-076855 A
PTL 5: JP 2006-172722 A
PTL 6: JP 2012-253004 A
PTL 7: US 2008/0234395

### Non-Patent Literature

NPL 1: Nature, vol.353, p.737-740, 1991
NPL 2: Chemistry Letters, 2002, p.1250

### SUMMARY

### (Technical Problem)

It would therefore be helpful to provide a binder-free, low-temperature deposition paste, in particular a paste for precise formation of a semiconductor porous film (hereinafter occasionally referred to as a "porous semiconductor layer") by low-temperature deposition, and a simple method for producing the same.

### (Solution to Problem)

The problem to be solved by this disclosure can be solved by the following items that specify this disclosure and preferred forms thereof.
(1) A viscous dispersion liquid including:
   a dispersion medium including water; and
   titanium dioxide nanoparticles as the main component of semiconductor particles contained in the viscous dispersion liquid, wherein the viscous dispersion liquid has a solid content concentration of 30% by mass to 60% by mass,
   the titanium dioxide nanoparticles include anatase crystalline titanium dioxide nanoparticles having an average particle diameter of 10 nm to 100 nm, and brookite crystalline titanium dioxide nanoparticles having an average particle diameter of 5 nm to 15 nm, and
   the viscous dispersion liquid has a viscosity of 10 Pa·s to 500 Pa·s at 25°C, and
   the amount of organic materials having a boiling point of 150 °C or higher at a pressure of 1 atm is 1% by mass or less in terms of solid content,
   characterized in that
   the dispersion medium includes water in a proportion of 95 % by mass or more.
(2) The viscous dispersion liquid of (1), wherein the anatase crystalline titanium dioxide nanoparticles include anatase crystalline titanium dioxide nanoparticles (a) having an average particle diameter of 30 nm to 100 nm.
(3) The viscous dispersion liquid of (2), wherein the anatase crystalline titanium dioxide nanoparticles further include anatase crystalline titanium dioxide nanoparticles (b) having an average particle diameter of 10 nm to 25 nm.
(4) The viscous dispersion liquid of (2) or (3), wherein a proportion of the anatase crystalline titanium dioxide nanoparticles (a) in the anatase crystalline titanium dioxide nanoparticles is 60% by mass or more.
(5) A method of producing the viscous dispersion liquid of (1), including:
   adding the anatase crystalline titanium dioxide nanoparticles into a water dispersion of the brookite crystalline titanium dioxide nanoparticles.
(6) The method of (5), wherein adding the anatase crystalline titanium dioxide nanoparticles includes: (a) adding anatase crystalline titanium dioxide nanoparticles (a) having an average particle diameter of 30 nm to 100 nm; and (b) adding anatase crystalline titanium dioxide nanoparticles (b) having an average particle diameter of 10 nm to 25 nm.
(7) A method of manufacturing a porous semiconductor electrode substrate including:
   a conductive substrate; and
   a porous semiconductor layer,
   the method comprising applying the viscous dispersion liquid of any one of (1) to (4) onto the conductive substrate, and drying the viscous dispersion liquid applied to form a porous semiconductor layer covering the conductive substrate.
(8) A method of manufacturing a dye-sensitized solar cell, the method comprising manufacturing a porous semiconductor electrode substrate in accordance with (7).

### (Advantageous Effect)

According to the viscous dispersion liquid disclosed herein, it is possible to precisely form a porous semiconductor layer by low-temperature deposition. As a result, it is possible to obtain a porous semiconductor electrode substrate in which a porous semiconductor layer is precisely formed on a conductive substrate, and thus to assemble a film dye-sensitized solar cell having a superior energy conversion efficiency.

### DETAILED DESCRIPTION

The viscous dispersion liquid disclosed herein is a binder-free, low-temperature deposition paste, which contains semiconductor particles such as titanium dioxide particles. The viscous dispersion liquid is effectively used for depositing a porous semiconductor layer onto a substrate at low temperatures, particularly for fabricating a plastic film electrode that requires deposition at low temperatures. The viscous dispersion liquid disclosed herein is a viscous liquid in which semiconductor crystalline nanoparticles are dispersed as the main component, and is normally white and opaque. The viscous dispersion liquid disclosed herein is substantially free of binder materials such as resin and latex which are normally added in order to increase the viscosity of the dispersion liquid or adhesion to a substrate during deposition. Accordingly, a porous semiconductor layer formed using the viscous dispersion liquid maintains high levels of electrical conductivity.

As used herein, "substantially free of binder materials" means that the amount of organic materials having a boiling point of 150°C or higher at a pressure of 1 atm is 1% by mass or less in terms of solid content. The amount of organic materials having a boiling point of 150°C or higher at a pressure of 1 atm is preferably 0.5% by mass or less, and more preferably 0% by mass, in terms of solid content.

The semiconductor crystalline nanoparticles contained in the viscous dispersion liquid disclosed herein can be produced by any of the methods known in the art. Examples of methods of producing crystalline nanoparticles include the sol-gel method described for example in Zorugeruhou no Kagaku (Science of Sol-Gel Method), Agne Shofu Publishing Inc., 1998; methods wherein metal chlorides are subjected to high-temperature hydrolysis in mineral acid salts to produce oxide fine particles; and spray pyrolysis wherein metal compounds are pyrolyzed at high temperatures in gas phase into ultrafine particles. Ultrafine and nanoparticles of semiconductors such as titanium dioxide which are produced by these methods are explained in "Yanagida, H., Engineering System for Fine Particles, Applied Technology II, Fuji Techno System (2002)."

Examples of semiconductor particles which may be contained in the viscous dispersion liquid disclosed herein include particles of metal oxides and metal chalcogenides. Examples of metal elements of these oxides and chalcogenides include titanium, tin, zinc, iron, tungsten, zirconium, strontium, indium, cerium, vanadium, niobium, tantalum, cadmium, lead, antimony, and bismuth. Additional examples of metal oxides include those having a perovskite structure; preferred examples of metal oxides having a perovskite structure include strontium titanate, calcium titanate, sodium titanate, barium titanate, and potassium niobate.

Of these materials of semiconductor particles, preferred are n-type inorganic semiconductors, such as TiO₂, TiSrO₃, ZnO, Nb₂O₃, SnO₂, WO₃, Si, CdS, CdSe, V₂O₅, ZnS, ZnSe, SnSe, KTaO₃, FeS₂, and PbS. Of these n-type inorganic semiconductors, more preferred are metal oxides such as TiO₂, ZnO, SnO₂, WO₃ and Nb₂O₃, with titanium dioxide (TiO₂) being particularly preferred.

The semiconductor particles contained in the viscous dispersion liquid disclosed herein include crystalline titanium dioxide nanoparticles that is semiconductor crystalline nanoparticles as the main component.

As used herein, "main component" means that the proportion is 50% by mass or more. The proportion of crystalline titanium dioxide nanoparticles in the semiconductor particles is preferably 80% by mass or more, and more preferably 90% by mass or more.

Production of titanium dioxide comes in two methods: a liquid-phase method wherein titanium tetrachloride or titanyl sulfate is hydrolyzed, and a gas-phase method wherein titanium tetrachloride is mixed with oxygen or oxygen-containing gas and combusted. The liquid-phase method can produce titanium dioxide having an anatase crystal structure as the main phase. However, titanium dioxide produced by the liquid-phase method is prepared as a sol or slurry and requires drying for use as powder. Further, the liquid-phase method suffers from the problem of promoting aggregation (formation of secondary particles) by drying. On the other hand, the gas-phase method is characterized by superior dispersibility of titanium dioxide over that of the liquid-phase method due to the absence of solvent, and by superior crystallinity of titanium dioxide due to the use of high temperatures during synthesis. In the meantime, crystal forms of titanium dioxide nanoparticles include anatase, brookite, and rutile. When titanium oxide is produced by the gas-phase method, titanium oxide that is produced at the lowest temperature and most stable is titanium oxide in the anatase form, which transforms into brookite form and into rutile form as heat is applied. The crystal structure of titanium dioxide nanoparticles can be determined by measuring a diffraction pattern by X-ray diffraction. The average particle diameter of titanium dioxide nanoparticles can be calculated by photon correlation spectroscopy using laser light scattering or by measuring a particle size distribution by scanning electron microscopy. Specifically, the average particle diameter of titanium dioxide nanoparticles can be measured by photon correlation spectroscopy using laser light scattering when, for example they are dispersed in liquid, and can be measured by scanning electron microscopy when they are present in a dry state.

The crystalline titanium dioxide nanoparticles used in the viscous dispersion liquid disclosed herein include particles having an anatase crystal structure and particles having a brookite crystal structure. Specifically, the viscous dispersion liquid disclosed herein contains a mixture of particles in the anatase crystal form and particles in the brookite crystal form. The titanium dioxide nanoparticles may be of various shapes, such as irregular, spherical, polygonal, fibrous, and nanotubular shapes, with polygonal and nanotubular shapes being preferable, and polygonal shape being particularly preferable.

The size of the anatase crystalline titanium dioxide nanoparticles contained in the viscous dispersion liquid disclosed herein is 10 nm to 100 nm in terms of its average particle diameter. From the perspective of precisely forming a suitable porous semiconductor layer, the anatase crystalline titanium dioxide nanoparticles preferably have an average particle diameter of 30 nm or more, more preferably 50 nm or more, preferably 90 nm or less, and more preferably 60 nm or less.

The anatase crystalline titanium dioxide nanoparticles contained in the viscous dispersion liquid disclosed herein preferably include anatase crystalline titanium dioxide nanoparticles having an average particle diameter of 30 nm to 100 nm (hereinafter referred to as "anatase (a)"). From the perspective of precisely forming a suitable porous semiconductor layer, the anatase (a) preferably has an average particle diameter of 30 nm or more, more preferably 50 nm or more, preferably 90 nm or less, and more preferably 60 nm or less.

The anatase crystalline titanium dioxide nanoparticles contained in the viscous dispersion liquid disclosed herein further preferably include anatase crystalline titanium dioxide nanoparticles having an average particle diameter of 10 nm to 25 nm (hereinafter referred to as "anatase (b)") in addition to the anatase (a). When anatase crystalline titanium dioxide nanoparticles having an average particle diameter of 10 nm to 25 nm are added, the viscosity of the viscous dispersion liquid is optimized for high-precision deposition by screening printing or other methods, resulting in the coated film having improved deposition properties as well as improved peel resistance. From the perspective of precisely forming a suitable porous semiconductor layer, the anatase (b) preferably has an average particle diameter of 13 nm or more, preferably 20 nm or less, and more preferably 17 nm or less.

The proportion of the anatase (a) in the anatase crystalline titanium dioxide nanoparticles is preferably 60% by mass to 100% by mass, more preferably 70% by mass to 95% by mass, and still more preferably 80% by mass to 90% by mass. The proportion of the anatase (b) in the anatase crystalline titanium dioxide nanoparticles is preferably 0% by mass to 40% by mass, more preferably 5% by mass to 30% by mass, and still more preferably 10% by mass to 20% by mass. When the proportion of the anatase (b) exceeds 40% by mass, the viscous dispersion liquid has a viscosity that exceeds a level optimal for high-precision deposition by screen printing or other methods, resulting in the coated film having poor deposition properties and reduced peel resistance.

The anatase crystalline titanium dioxide nanoparticles contained in the viscous dispersion liquid disclosed herein are preferably obtained by the gas-phase method. The anatase crystalline titanium dioxide nanoparticles may be a mixture of rutile crystals and anatase crystals only when the rutile transformation ratio (proportion of rutile crystals) is less than 50%. A rutile transformation ratio of 50% or more causes reductions in photocatalytic function and therefore photovoltaic power, resulting in failure to provide a dye-sensitized solar cell showing a sufficient performance. It should be noted, however, that the viscous dispersion liquid may contain small amounts of crystalline titanium dioxide nanoparticles having a rutile transformation ratio of greater than 80% and an average particle diameter of greater than 100 nm, as light scattering particles.

On the other hand, the size of brookite crystalline titanium dioxide nanoparticles contained in the viscous dispersion liquid disclosed herein is 5 nm to 15 nm, more preferably 7 nm to 13 nm, in terms of its average particle diameter. Brookite crystalline titanium dioxide nanoparticles can be prepared for example by the liquid-phase method in the form of an acidic aqueous sol solution in which titanium dioxide nanoparticles including brookite crystals are dispersed. Brookite titanium oxide exhibits superior adhesion due to strong particle condensation, but exhibits poor deposition properties when used alone. For this reason, when mixed with anatase crystalline titanium dioxide nanoparticles, brookite crystalline titanium dioxide nanoparticles play a key role in improving binding properties of the anatase crystalline titanium dioxide nanoparticles during deposition. Brookite crystalline titanium dioxide produced by the liquid-phase method, in particular brookite crystalline titanium dioxide produced by hydrolysis of titanium tetrachloride or titanium trichloride, is preferable.

The viscous dispersion liquid disclosed herein is used for forming a porous semiconductor layer; therefore, brookite crystalline titanium dioxide used for preparing the viscous dispersion liquid may be prepared as a dispersion sol. Further, brookite crystalline titanium dioxide in the form of dispersion sol is more stable in dispersion state and provides better coatability than any other form. The dispersion sol (dispersion liquid) of brookite crystalline titanium dioxide is preferably adjusted to be acidic for increased dispersibility; the pH of the dispersion liquid is preferably 1 to 6, and more preferably 2 to 5. From the perspective of dispersion stability, the dispersion liquid of brookite crystalline titanium dioxide nanoparticles preferably has a solid content concentration of 1% by mass to 25% by mass, and more preferably 5% by mass to 20% by mass.

From the perspective of precisely forming a suitable porous semiconductor layer using the viscous dispersion liquid, the proportion of anatase crystalline titanium dioxide nanoparticles in the viscous dispersion liquid relative to the total of the anatase crystalline titanium dioxide nanoparticles and brookite crystalline titanium dioxide nanoparticles is preferably 70% by mass or more, more preferably 75% by mass or more, preferably 85% by mass or less, and more preferably 80% by mass or less.

The solid content in the viscous dispersion liquid disclosed herein is typically semiconductor particles, including crystalline titanium dioxide nanoparticles, and additives described later. In the solid content, the amount of semiconductor particles is normally 90% by mass or more, preferably 95% by mass or more, and normally 100% by mass or less. The viscous dispersion liquid has a solid content concentration of 30% by mass to 60% by mass. A solid content concentration of less than 30% by mass results in failure to obtain a dispersion liquid viscosity suitable for precise deposition by screen printing or other methods, as well as in poor peel resistance of the coated film. A solid concentration of greater than 60% by mass makes it difficult to achieve precise deposition by screen printing or other methods.

The viscous dispersion liquid disclosed herein can be mixed with various inorganic compounds other than semiconductors as additives. Examples of inorganic compounds include various oxides and conductive materials. Examples of inorganic oxides include oxides of metals, alkali metals, alkali earth metals, transition metals, rare earthes, and lanthanoids; and oxides of non-metals such as Si, P and Se. Examples of metals include Al, Ge, Sn, In, Sb, T1, Pb, and Bi. Examples of alkali metals and alkali earth metals include Li, Mg, Ca, Sr, and Ba. Examples of transition metals include Ti, V, Cr, Mn, Fe, Ni, Zn, Zr, Nb, Mo, Ru, Pd, W, Os, Ir, Pt, and Au. Examples of conductive materials include metals, noble metals, and carbonaceous materials (e.g., carbon nanotubes).

The viscous dispersion liquid disclosed herein is a viscous liquid composition having a sufficiently high viscosity required for coating, wherein the viscosity at 25°C is 10 Pa·s to 500 Pa·s, and more preferably 50 Pa·s to 300 Pa·s. The viscous dispersion liquid disclosed herein can be suitably used for screen printing. The paste viscosity can be measured with a vibration viscometer.

The viscous dispersion liquid disclosed herein contains water as a dispersion medium. From the perspective of viscosity adjustment and increasing drying properties, however, this does not preclude the addition of small amounts of C3 to C10 linear or branched alcohols. Specific examples of alcohols include 1-propanol, 2-propanol, 1-butanol, tert-butanol, 1-pentanol, 2-pentanol, 3-pentanol, 2-methyl-1-butanol, 3-methyl-2-butanol, 2-ethyl-1-butanol, 2,3-dimethyl-2-butanol, 2-methyl-2-pentanol, 4-methyl-2-pentanol, tert-pentyl alcohol, propylene glycol monopropyl ether, tert-butyl cellosolve, cyclohexanol, 4-tert-butyl hexanol, and α-terpineol.

The proportion of water in the dispersion medium is 95% by mass or more, more preferably 98% by mass or more, and still more preferably 100% by mass.

The viscous dispersion liquid disclosed herein is preferably produced by adding anatase crystalline titanium dioxide nanoparticles into an aqueous sol (water dispersion liquid) of brookite crystalline titanium dioxide nanoparticles produced by the liquid-phase method, particularly brookite crystalline titanium dioxide nanoparticles prepared by hydrolysis of titanium tetrachloride or titanium trichloride. The reason for this is that brookite crystalline titanium dioxide nanoparticles may be easily prepared as an aqueous sol.

When the anatase (a) and anatase (b) described above are used as anatase crystalline titanium dioxide nanoparticles, the anatase (a) and anatase (b) may be added to the aqueous sol of brookite crystalline titanium dioxide nanoparticles either separately or at the same time.

The viscous dispersion liquid disclosed herein can be prepared by dispersing into a dispersion medium the components described above by means of any of the dispersing devices known in the art, such as a triple roll mil, paint conditioner, homogenizer, ultrasonic stirrer, high-speed disper blade, or rotation/revolution mixing conditioner.

The viscous dispersion liquid disclosed herein is applied onto a conductive substrate and subjected to, for example, low-temperature heat treatment, whereby a porous semiconductor electrode substrate can be manufactured having a porous semiconductor layer covering the conductive substrate. Specifically, the paste disclosed herein is applied onto a conductive substrate to a thickness of, for example. 1 µm to 20 µm, the resultant coated film is dried, and the dried coated film is subjected to heat treatment at temperatures as low as, for example, room temperature to 150°C, whereby a porous semiconductor layer can be obtained which tightly adheres to the substrate. This low-temperature heat treatment is preferably performed in a temperature range of 120°C to 150°C. The porous semiconductor layer manufactured in this way is a mesoporous film with nanosized pores. Application of the viscous dispersion liquid disclosed herein is preferably performed using screen printing, metal masking, or gravure printing, with screen printing being particularly preferable. It should be noted that the viscous dispersion liquid disclosed herein may be diluted and then applied by doctor blade coating, squeegee coating, or spray coating.

The conductive substrate to be coated with the viscous dispersion liquid disclosed herein can be a self-conductive substrate such as a metal substrate made of titanium, stainless steel or other metals; or a substrate that includes a base material (support) made of inorganic material (e.g., glass), organic material (e.g., plastic) or other materials, and a conductive layer provided on the support. The material of the conductive substrate can be appropriately selected according to the intended application of the porous semiconductor electrode substrate; for example, when the porous semiconductor electrode substrate requires optical transparency, transparent material may be used.

Preferred are conductive substrates having a flexible plastic support. More preferred conductive substrates are transparent conductive plastic films, with those having a surface resistivity of 20 Ω/square or less being particularly preferable. Preferred porous semiconductor electrode substrates manufactured using the viscous dispersion liquid disclosed herein are plastic electrode substrates having a transparent conductive plastic film with a surface resistivity of 20 Ω/square or less and a porous semiconductor layer covering the surface of the transparent conductive plastic film. The thickness of the plastic electrode substrate is preferably 50 µm to 250 µm, including the porous semiconductor layer. The thickness of the transparent conductive plastic film alone is preferably 30 µm to 200 µm.

Using the viscous dispersion liquid disclosed herein, it is possible to deposit a porous semiconductor layer at low temperatures. Accordingly, using the viscous dispersion disclosed herein, a conductive substrate may be used in which a plastic support such as a transparent conductive plastic film is used.

The transparent conductive plastic film is composed of a conductive layer and a plastic support that supports thereon the conductive layer. The plastic support of the transparent conductive plastic film is preferably made of material which is colorless and highly transparent, highly heat resistant, superior in chemical resistance and gas barrier, and inexpensive. Preferred materials of the plastic support chosen from this perspective are polyethylene terephthalate (PET), polyethylene naphthalate (PEN), syndiotatic polystyrene (SPS), polyphenylene sulfide (PPS), polycarbonate (PC), polyarylate (PAr), polysulfone (PSF), polyester sulfone (PES), polyetherimide (PEI), and transparent polyimide (PI). Of these materials, particularly preferred in terms of chemical resistance and costs are polyethylene terephthalte (PET) and polyethylene naphthalate (PEN).

The conductive layer of the transparent conductive plastic film can contain, as a conductive material, metals such as platinum, gold, silver, copper, aluminum or indium; carbonaceous material such as carbon nanotubes; or conductive metal oxides such as indium tin oxide or tin oxide. Of these conductive materials, preferred are conductive metal oxides for their optical transparency, with indium tin oxide (ITO) and zinc oxide being particularly preferable. Indium tin oxide (ITO) preferably has a peak transmittance at 500 nm to 600 nm from the perspective of photoelectric conversion efficiency and visibility of displays or other devices. The conductive layer needs to have a low surface resistivity (or sheet resistivity) and preferably has a surface resistivity of 20 Ω/square or less. The surface resistivity is preferably 10 Ω/square or less, and more preferably 3 Ω/square or less. The conductive layer may be provided with auxiliary leads for current collection by means of patterning or other methods. Such auxiliary leads are normally made of low-resistant metal material such as copper, silver, aluminum, platinum, gold, titanium, or nickel. In cases of a transparent conductive layer patterned with such auxiliary leads, the surface resistivity is measured as a resistivity of surface including the auxiliary leads, which is preferably 10 Ω/square or less, and more preferably 3 Ω/square or less. A pattern of such auxiliary leads can be formed on a transparent plastic support, and a transparent conductive layer formed of, for example, an ITO film is preferably formed thereon.

A porous semiconductor electrode substrate formed by providing a porous semiconductor layer manufactured using the viscous dispersion liquid as described above on a conductive substrate can be used as a dye-sensitized electrode (photoelectrode) of a dye-sensitized solar cell by allowing a dye to be adsorbed onto the porous semiconductor layer. Alternatively, the porous semiconductor electrode substrate can be used as a photoelectrode by allowing a light-absorbing material described later to be adsorbed onto the porous semiconductor layer. For the manufacture of a dye-sensitized electrode, it is required to sensitize the surface of the porous semiconductor layer by adsorption of a dye. As dye molecules used for sensitization, sensitizing materials known in the art which have been used for dye-sensitized semiconductors are widely used. Examples of such sensitizing materials include organic dyes such as cyanine dyes, merocyanie dyes, oxonol dyes, xanthenes dyes, squarylium dyes, polymethine dyes, coumarin dyes, riboflavin dyes, and perylene dyes; and complex dyes such as Ru complexes and metal phthalocyanine derivatives, metal porphyrin derivatives, and chlorophyll derivatives. In addition, synthetic and natural dyes described in Kinou Zairyo (Functional Materials) June 2003, pp. 5-8, and coumarin-based organic dyes described in Journal of Physical Chemistry (J. Phys. Chem.), B. vol.107, pp.597 (2003) can also be used.

In this disclosure, as a light-absorbing material, an organic/inorganic hybrid perovskite compound having the general formula (1) or (2) given below may be used instead of the dyes (sensitizing dyes) described above to form a photoelectrode in which the light-absorbing material is adsorbed onto the porous semiconductor layer.

CH₃NH₃M¹X₃ ... (1)

where M¹ is a divalent metal ion, and X is at least one element selected from F, Cl, Br and I.

(R¹NH₃)₂M¹X₄ ... (2)

where R¹ is a C2 or higher alkyl group, alkenyl group, aralkyl group, aryl group, heterocyclic group or aromatic heterocyclic group, M¹ is a divalent metal ion, and X is at least one element selected from F, Cl. Br and I.

Specific examples of the organic/inorganic hybrid perovskite compound include CH₃NH₃PbI₃, CH₃NH₃PbBr₃, (CH₃(CH₂)ₙCHCH₃NH₃)₂PbI₄ (where n is 5 to 8), and (C₆H₅C₂H₄NH₃)₂PbBr₄.

The organic/inorganic hybrid perovskite compound can be adsorbed onto the porous semiconductor layer by dissolving it into organic solvent and applying the resultant solution on the porous semiconductor layer by coating methods such as dip coating, bar coating, printing, spray coating, spin coating, or die coating.

In a photoelectrode including the porous semiconductor electrode substrate, the photoelectrode layer in which a dye (or light-absorbing material) is adsorbed onto the porous semiconductor layer formed on the conductive substrate substantially consists of a semiconductor-containing inorganic compound material and a dye (or light-absorbing material). As used herein, "substantially consists of a semiconductor-containing inorganic compound material and a dye (or light-absorbing material)" means that a semiconductor-containing inorganic compound material and a dye (or light-absorbing material) are the main components of the photoelectrode, and the total mass of these components is almost the same as the mass of the total solid content of the photoelectrode. As used herein, "main components" means that a semiconductor-containing inorganic compound material and a dye (or light-absorbing material) makes up 90% by mass or more of the photoelectrode; the photoelectrode is preferably composed of 95% by mass or more, more preferably 100% by mass, of a semiconductor-containing inorganic compound material and a dye (or light-absorbing material).

In this disclosure, the proportion of the semiconductor-containing inorganic compound to total mass of the photoelectrode layer can be measured for example by the method described below. Specifically, the photoelectrode layer is separated from the conductive substrate, and materials other than photoelectrode layer components (liquid and solid components derived from electrolysis solution) are then washed away with a solvent of the electrolysis solution. The pure form of the photoelectrode layer is dried and the mass is weighed. The mass corresponds to the mass of total solid content.

The total solid is then fully washed with a polar organic solvent such as alcohol or acetonitrile and a non-polar organic solvent such as toluene or chloroform to remove organic materials. Subsequently, the photoelectrode is heated in oxygen atmosphere or air for 1 hour or longer at 400°C or higher, and the mass of the residue after heating is weighed. The quotient of the dry mass of the residue divided by the mass of the total solid content is the proportion of the mass of the semiconductor-containing inorganic compound to total mass of the photoelectrode layer (porous semiconductor layer in which a dye or light-absorbing material is adsorbed).

The proportion of the mass of the dye (or light-absorbing material) in the dye-sensitized electrode can be measured for example by the method described below. Specifically, the photoelectrode layer is removed from the conductive substrate, and the total mass is weighed. The photoelectrode layer in which a dye (or light-absorbing material) is adsorbed is fully washed with a solvent effective for elution of the dye (or light-absorbing material), such as water, methanol or acetonitrile, allowing the dye (or light-absorbing material) to be desorbed from the photoelectrode layer. The photoelectrode layer is washed to an extent that the color of the dye (or light-absorbing material) scarcely remains. After evaporating off the solvent of the washing solution containing the dye (or light-absorbing material), the dry mass of the remaining dye (or light-absorbing material) is weighed. The quotient of the dry mass of the dye (or light-absorbing material) divided by the mass of the total solid content is the proportion of interest of the dye (or light-absorbing material).

In a porous semiconductor layer fabricated by coating with the viscous dispersion liquid disclosed herein, the porosity (volume fraction of hollow pores) is preferably in the range of 30% by volume to 85% by volume. The porosity is particularly preferably in the range of 40% by volume to 70% by volume.

Using a porous semiconductor electrode substrate manufactured by coating of a conductive substrate with the viscous dispersion liquid disclosed herein, a dye-sensitized solar cell (photovoltaic cell) can be manufactured. A titanium dioxide layer particularly exerts superior performance as the porous semiconductor layer of the porous semiconductor electrode substrate. For example, an ion conductive electrolyte layer and a counter electrode are sequentially laminated on a photoelectrode (dye-sensitized electrode obtained by adsorbing a dye onto a porous semiconductor layer made of porous titanium dioxide provided on a transparent conductive plastic film) to form a multilayer laminate. In this way, a mechanically flexible film solar cell (photoelectric conversion element) can be manufactured.

An aqueous electrolysis solution, organic solvent electrolysis solution, ionic liquid electrolysis solution (molten salt electrolysis solution) or the like can be used for the ion conductive electrolyte layer used in a film solar cell. Examples of redox agents to be added to these electrolysis solutions include electrolysis solutions containing combinations of I₂ and iodides (where iodides are metal iodides such as LiI, NaI and KI, iodine salts of quaternary ammonium compounds, such as tetraalkyl ammonium iodide, pyridinium iodide, and imidazolium iodide, or the like); electrolysis solutions containing combinations of Br₂ and bromides (where bromides are metal bromides such as LiBr, NaBr, and KBr, bromine salts of quaternary ammonium compounds, such as tetraalkyl ammonium bromide and pyridinium bromide, or the like); metal complexes such as ferrocyanate-ferricyanate, and ferrocene-ferricinium ion; and sulfur compounds such as sodium polysulfide, and alkylthiol-alkyldisulfide. Of these, preferred are electrolytes in which I₂ and LiI or iodine salts of quaternary ammonium compounds, such as pyridinium iodide and imidazolium iodide are combined, from the perspective of high performance of a photovoltaic cell.

In addition to the electrolysis solutions described above, it is possible to employ electrolysis solutions free of a redox couple (I⁻/I³⁻) consisting of a combination of iodine and iodide (hereinafter "iodine-free electrolysis solution"). Iodides, electrolytes used in dye-sensitized solar cells, generate trace amounts of iodine when dissolved into electrolysis solvents. Oxidation/corrosion reactions caused by iodine generated in the electrolysis solution promote degradation of the cell. Further, in dye-sensitized solar cells that include a plastic film as a conductive substrate, coloring of the conductive substrate due to sublimation of iodine becomes problematic.

Specifically, iodine-free electrolysis solutions are basically solutions that contain as a solute a single or mixture of inorganic salts and ionic liquid salts (e.g., imidazolium salts, tetraalkyl ammonium salts, and salts of compounds having a quaternary nitrogen atom as the spiro atom) of iodides, and as a solvent either one or both of glycol ether and 5-membered cyclic ether.

Further, in this disclosure, it is possible to manufacture a solid-state photoelectric conversion element by using a p-type semiconductor formed of an inorganic perovskite compound having the formula (3) given below and/or an organic/inorganic hybrid perovskite compound having the formula (4) given below, instead of using liquid electrolysis solutions. Specifically, a solid-state photoelectric conversion element may be manufactured as follows: A p-type semiconductor is dissolved into solvent. A porous semiconductor layer which contains titanium dioxide, an n-type semiconductor, is impregnated with the resultant solution by coating methods such as gravure coating, bar coating, printing, spray coating, spin coating, dip coating, or die coating. Drying the solution, the p-type semiconductor is allowed to adsorb onto and cover the porous semiconductor layer in such a way as to enclose the porous semiconductor layer.

CsM²X₃ ... (3)

where M² is a divalent metal ion, and X is at least one element selected from F, Cl, Br, and I.

CH₃NH₃SnX₃ ... (4)

where X is at least one element selected from F, Cl, Br, and I.

Specific examples of the inorganic perovskite compound having the formula (3) include CsSnI₃ and CsSnBr₃. Specific examples of the organic/inorganic hybrid perovskite compound having the formula (4) include CH₃NH₃SnI₃.

Examples of conductive materials used for the conductive layer of the counter electrode of a solar cell include metals such as platinum, gold, silver, copper, titanium, aluminum, magnesium and indium; carbonaceous materials such as carbon nanotubes; and conductive metal oxides such as indium tin oxide (ITO) and fluorine doped tin oxide (FTO). Of these conductive materials, preferred are platinum, titanium, ITO, and carbonaceous materials for their superior corrosion resistance.

The dye-sensitized solar cell fabricated using the viscous dispersion liquid disclosed herein can be further provided with various layers where desired in addition to the basic layer configuration described above. For example, it is possible to provide, as an undercoat layer, a dense, semiconductor thin film layer between a conductive substrate (including a conductive plastic support) and a porous semiconductor layer.

Preferred materials of the undercoat layer are metal oxides; examples thereof include TiO₂, SnO₂, Fe₂O₃, WO₃, ZnO, and Nb₂O₅. The undercoat layer can be formed by spray pyrolysis described for example in Electrochim. Acta 40, 643-652 (1995), as well as by sputtering or using alkoxides or alkoxy oligomers of the corresponding oxides. A preferred thickness of the undercoat layer is 5 nm to 100 nm. Either one or both of the photoelectrode and counter electrode may be provided with function layer(s) such as a protection layer, an antireflection layer, and a gas barrier layer on the outer surface, between the conductive layer and substrate, or at the middle of the substrate. These functional layers can be formed by coating, deposition, attaching or other methods according to their material.

### EXAMPLES

The following describes the best mode for practicing this disclosure by way of Examples. A list of evaluation results is given in Table 1.

### (1) Preparation of Binder-Free, Low-Temperature Deposition Paste as Viscous Dispersion Liquid (hereinafter "Paste")

18.4 g of anatase titanium dioxide nanoparticle powder having an average particle diameter of 50 nm (anatase (a)) was added to 81.6 g of an aqueous dispersion sol of brookite titanium dioxide nanoparticles having an average particle diameter of 10 nm (NTB-1, from Showa Titanium Co., Ltd.; solid content concentration: 15% by mass), and mixed at a ratio of 60:40 (anatase titanium dioxide nanoparticles/brookite titanium dioxide nanoparticles; by solid content). This mixture was dispersed by passing through a desktop triple roll mill 10 times to prepare a screen printing paste (mass: 100 g). The paste had a solid content concentration of 30.6% by mass and a viscosity of 11 Pa·s (25°C).

The paste's viscosity was measured with a vibration viscometer (VISCOMATE, model VM-10A-H, from CBC Co., Ltd.). This paste is a highly viscous, binder-free paste, which consists of titanium dioxide and water, completely free of binder (Example 1).

Next, screen printing pastes of Examples 2 to 5 and 13 to 15 shown in Table 1 were prepared using a similar preparation method.

Additionally, 29.5 g of anatase titanium dioxide nanoparticle powder having an average particle diameter of 50 nm (anatase (a)) and 1.6 g of anatase titanium dioxide nanoparticle powder having an average particle diameter of 15 nm (anatase (b)) were added to 68.9 g of an aqueous dispersion sol of brookite titanium dioxide nanoparticles having an average particle diameter of 10 nm (NTB-1, from Showa Titanium Co., Ltd.; solid content concentration: 15% by mass), and mixed at a ratio of 75:25 (anatase titanium dioxide nanoparticles/brookite titanium dioxide nanoparticles; by solid content). The anatase titanium dioxide nanoparticle powder having an average particle diameter of 15 nm (anatase (b)) makes up 5% by mass of the total amount of the anatase titanium dioxide nanoparticles (a + b). This mixture was dispersed by passing through a desktop triple roll mill 10 times to prepare a screen printing paste (mass: 100 g). The paste had a solid content concentration of 41.4% by mass and a viscosity of 65 Pa·s (25°C).

The paste's viscosity was measured with a vibration viscometer (VISCOMATE, model VM-10A-H, from CBC Co., Ltd.). This paste is a highly viscous, binder-free paste, which consists of titanium dioxide and water, completely free of binder (Example 6).

Next, screen printing pastes of Examples 7 to 12 and 16 to 19 shown in Table 1 were prepared using a similar preparation method.

Pastes of Comparative Examples 1 to 9 were prepared by a preparation method according to Example 1 or 6 while changing the blending ratios of anatase (a), anatase (b) and brookite titanium dioxide nanoparticles (see Table 1).

### (2) Manufacture of Dye-Sensitized Solar Cell using Paste

### (2-1) Manufacture of Porous Semiconductor Film Electrode Substrate

As a transparent conductive plastic film, a polyethylene terephthalte (PET) film (thickness: 200 µm, surface resistivity: 15 Ω/square) on which ITO is deposited as a conductive film was used. To reduce the surface resistivity of the transparent conductive plastic film, parallel silver auxiliary lead lines for current collection (line width: 100 µm, thickness: 20 µm) were patterned on the ITO film at intervals of 10 mm by screen printing of a silver dispersion paste. The silver pattern was coated with a 250 µm-wide polyester resin protection film for complete protection of the silver lines. The practical sheet resistivity of the resultant patterned conductive ITO-PET film was 3 Ω/square.

The conductive ITO-PET film was cut into 2 cm × 10 cm pieces. The ITO surface of each conductive substrate thus obtained was printed with a pattern of 6 circles (6 mm diameter) at intervals of 1.5 cm using the paste prepared in Example or Comparative Example and a 200 mesh screen, followed by heat drying (150°C, 10 min) to manufacture a 8.2 µm thick porous semiconductor film substrate (porous semiconductor electrode substrate).

### (2-2) Manufacture of Dye-Sensitized Solar Cell

Dye solution was prepared by dissolving a tetrabutyl ammonium salt of bisisocyanate bisbipyridyl Ru complex (N719) (Ru bipyridyl complex dye) into a 1:1 volume mixed solvent of acetonitrile and tert-butanol to a concentration of 3 × 10⁻⁴ mol/L. The porous semiconductor film electrode substrate was immersed into the dye solution, and left to stand at 40°C for 60 minutes under stirring to complete dye adsorption. In this way a dye-sensitized titanium oxide ITO-PET film electrode (photoelectrode) was manufactured.

As a counter electrode, a conductive film having a sheet resistivity of 0.8 Ω/square was used. The conductive film was obtained by coating the ITO surface of a polyethylene terephthalate (PET) film (thickness: 200 µm, surface resistivity: 15 Ω/square, with ITO conductive layer) with a 100 nm thick platinum film by sputtering.

A photoelectrode was manufactured by cutting the dye adsorbed, dye-sensitized titanium dioxide ITO-PET film electrode prepared above into a 2 cm × 1.5 cm piece so that the 6 mm diameter titanium dioxide electrode portion centers on the piece. A counter electrode was manufactured by cutting the conductive film prepared above (platinum deposited ITO-PET film) into a 2 cm × 1.5 cm piece and boring an injection port for electrolysis solution (1 mm diameter). The counter electrode was overlaid on the photoelectrode with a 25 µm thick ionomer resin film (HIMILAN 1652, from DuPont-Mitsui Polychemicals Co., Ltd.) interposed in between as a spacer. Curing treatment was then performed at 110°C for 5 minutes. Non-aqueous organic electrolysis solution consisting of γ-butyrolactone, tetrabutylammonium iodide, butylmethylimidazolium iodide, and N-methylbenzimidazole was injected through the injection port by capillary action. Finally, a cover glass coated with UV curable resin (3035B, from ThreeBond Co., Ltd.) was placed over the injection port, and irradiated with spot UV light to close the injection port. By closing the injection port in such a manner as described above, a dye-sensitized solar cell photovoltaic cell for evaluation was manufactured.

### (3) Evaluations of Solar Cell

Using a solar simulator equipped with a 500W xenon lamp, the dye-sensitized solar cell was irradiated from the phtoelectrode side with AM 1.5 pseudo sunlight at incident light intensity of 100 mW/cm². Using a current/voltage meter, DC voltage to be applied to the device was swept at a constant rate of 10 mV/sec, and the photocurrent output from the device was measured to measure photocurrent-voltage characteristics. The photoelectric conversion efficiency (η) measured in this way for each device is given in Table 1 along with the paste composition.

### (4) Evaluations of Peel Resistance of Paste

The paste prepared in Example or Comparative Example shown in Table 1 was patterned on the ITO surface of the conductive ITO-PET film by printing using a 200 mesh screen, followed by heat drying (150°C, 10 min) to manufacture a 5.2 µm thick semiconductor film. The semiconductor film was subjected to a fatigue test wherein it is mechanically bent 10 times to a curvature of 1.0 cm⁻¹ each. The state of peeling of the semiconductor film was visually determined. The results were evaluated using the following four ratings: AA (excellent); A (good); B (bad, yet acceptable); and C (bad). The results are shown in Table 1.

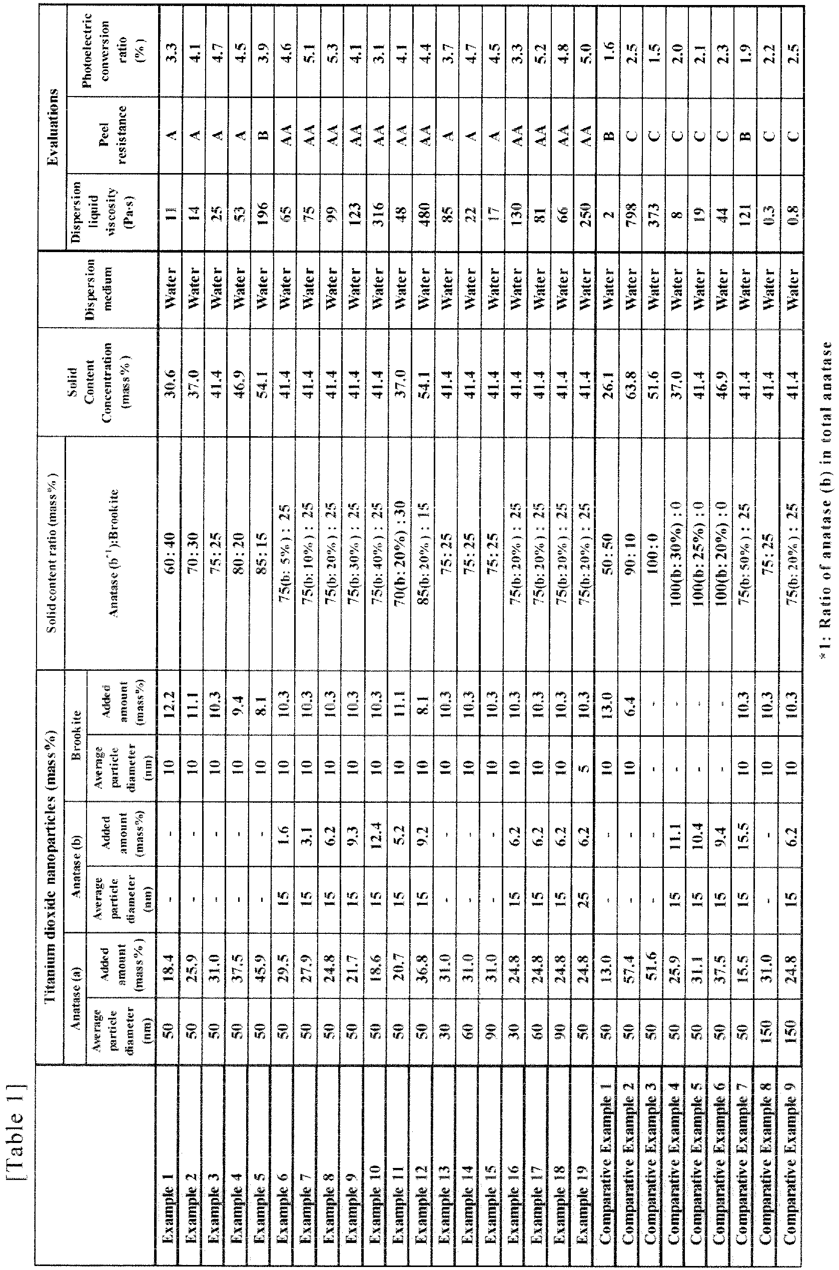

The results shown in Table 1 reveal the following facts with regard to practicability of the pastes for porous semiconductor layer.
1. When a mixture of anatase titanium dioxide nanoparticles and brookite itanium dioxide nanoparticles is not used, peel resistance and photoelectric conversion efficiency both decrease (comparison between Examples 1 to 5 and Comparative Examples 3 to 6).
2. When the total solid content concentration of anatase titanium dioxide nanoparticles and brookite titanium dioxide nanoparticles is not 30% by mass to 60% by mass and the viscosity of the dispersion liquid is not 10 to 500 Pa·s, peel resistance and photoelectric conversion efficiency decrease (comparison between Examples 1 to 5 and Comparative Examples 1 to 2).
3. When the anatase titanium dioxide nanoparticles disclosed herein contains 40% or less of anatase titanium dioxide nanoparticles having an average particle diameter of 10 nm to 25 nm (anatase (b)) relative to the total anatase titanium dioxide nanoparticles, it is particularly preferable as peel resistance remarkably improves (comparison among Example 3, Examples 6 to 12 and 16 to 19, and Comparative Example 7).
4. When the anatase (a) titanium dioxide nanoparticles are large-sized particles with an average particle diameter of greater than 100 nm, dispersion liquid viscosity decreases, peel resistance significantly decreases, and photoelectric conversion efficiency also decreases (comparison between Examples 3, 13 to 15 and Comparative Example 8, and comparison between Examples 8, 16 to 18 and Comparative Example 9).
5. When the anatase (b) titanium dioxide nanoparticles have an average particle diameter of 10 nm to 25 nm and the brookite titanium dioxide nanoparticles have an average particle diameter of 5 nm to 15 nm, dispersion liquid viscosity, peel resistance, and photoelectric conversion efficiency have superior characteristics (comparison between Example 8 and Example 19).

### INDUSTRIAL APPLICABILITY

According to the viscous dispersion liquid disclosed herein, it is possible to precisely form a porous semiconductor layer by low-temperature deposition. As a result, it is possible to obtain a porous semiconductor electrode substrate in which a porous semiconductor layer is precisely formed on a conductive substrate, and thus to assemble a film dye-sensitized solar cell having a superior energy conversion efficiency.

## Claims

1. A viscous dispersion liquid comprising:
a dispersion medium including water; and
titanium dioxide nanoparticles as the main component of semiconductor particles contained in the viscous dispersion liquid; wherein
the viscous dispersion liquid has a solid content concentration of 30% by mass to 60% by mass,
the titanium dioxide nanoparticles include anatase crystalline titanium dioxide nanoparticles having an average particle diameter of 10 nm to 100 nm, and brookite crystalline titanium dioxide nanoparticles having an average particle diameter of 5 nm to 15 nm,
the viscous dispersion liquid has a viscosity of 10 Pa·s to 500 Pa·s at 25°C, and
the amount of organic materials having a boiling point of 150 °C or higher at a pressure of 1 atm is 1% by mass or less in terms of solid content, **characterized in that**
the dispersion medium includes water in a proportion of 95 % by mass or more.

2. The viscous dispersion liquid of claim 1, wherein the anatase crystalline titanium dioxide nanoparticles include anatase crystalline titanium dioxide nanoparticles (a) having an average particle diameter of 30 nm to 100 nm.

3. The viscous dispersion liquid of claim 2, wherein the anatase crystalline titanium dioxide nanoparticles further include anatase crystalline titanium dioxide nanoparticles (b) having an average particle diameter of 10 nm to 25 nm.

4. The viscous dispersion liquid of claim 2 or 3, wherein a proportion of the anatase crystalline titanium dioxide nanoparticles (a) in the anatase crystalline titanium dioxide nanoparticles is 60% by mass or more.

5. A method of producing the viscous dispersion liquid of claim 1, comprising:
adding the anatase crystalline titanium dioxide nanoparticles into a water dispersion of the brookite crystalline titanium dioxide nanoparticles.

6. The method of claim 5, wherein adding the anatase crystalline titanium dioxide nanoparticles comprises: (a) adding anatase crystalline titanium dioxide nanoparticles (a) having an average particle diameter of 30 nm to 100 nm; and (b) adding anatase crystalline titanium dioxide nanoparticles (b) having an average particle diameter of 10 nm to 25 nm.

7. A method of manufacturing a porous semiconductor electrode substrate comprising:
a conductive substrate; and
a porous semiconductor layer,
the method comprising:
applying the viscous dispersion liquid of any one of claims 1 to 4 onto the conductive substrate, and
drying the viscous dispersion liquid applied to form a porous semiconductor layer covering the conductive substrate.

8. A method of manufacturing a dye-sensitized solar cell, the method comprising
manufacturing a porous semiconductor electrode substrate in accordance with claim 7.

## Patentansprüche

1. Eine viskose Dispersionsflüssigkeit, umfassend:
Ein Dispersionsmedium, welches Wasser beinhaltet; und
Titandioxid-Nanoteilchen als Hauptbestandteil von in der viskosen Dispersionsflüssigkeit enthaltenen Halbleiterteilchen; wobei
die viskose Dispersionsflüssigkeit eine Feststoffgehalts-Konzentration von 30 % in Masse bis 60 % in Masse hat,
die Titandioxid-Nanoteilchen Anatas-kristalline Titandioxid-Nanoteilchen, welche einen durchschnittlichen Teilchendurchmesser von 10 nm bis 100 nm haben, und Brookit-kristalline Titandioxid-Nanoteilchen, welche einen durchschnittlichen Teilchendurchmesser von 5 nm bis 15 nm haben, beinhalten,
die viskose Dispersionsflüssigkeit eine Viskosität von 10 Pa s bis 500 Pa s bei 25 °C hat, und
die Menge an organischen Materialien, welche einen Siedepunkt von 150 °C oder höher bei einem Druck von 1 atm haben, 1 % in Masse oder weniger bezüglich des Feststoffgehalts ist, **dadurch gekennzeichnet dass**
die Dispersionsflüssigkeit Wasser in einem Anteil von 95 % in Masse oder mehr beinhaltet.

2. Die viskose Dispersionsflüssigkeit nach Anspruch 1, wobei die Anatas-kristallinen Titandioxid-Nanoteilchen Anatas-kristalline Titandioxid-Nanoteilchen (a) beinhalten, welche einen durchschnittlichen Teilchendurchmesser von 30 nm bis 100 nm haben.

3. Die viskose Dispersionsflüssigkeit nach Anspruch 2, wobei die Anatas-kristallinen Titandioxid-Nanoteilchen ferner Anatas-kristalline Titandioxid-Nanoteilchen (b) beinhalten, welche einen durchschnittlichen Teilchendurchmesser von 10 nm bis 25 nm haben.

4. Die viskose Dispersionsflüssigkeit nach Anspruch 2 oder 3, wobei der Anteil an Anatas-kristallinen Titandioxid-Nanoteilchen (a) in den Anatas-kristallinen Titandioxid-Nanoteilchen 60 % in Masse oder mehr ist.

5. Ein Verfahren zur Erzeugung der viskosen Dispersionsflüssigkeit nach Anspruch 1, umfassend:
Hinzufügen von Anatas-kristallinen Titandioxid-Nanoteilchen zu einer Wasserdispersion der Brookit-kristallinen Titandioxid-Nanoteilchen.

6. Das Verfahren nach Anspruch 5, wobei das Hinzufügen von Anatas-kristallinen Titandioxid-Nanoteilchen umfasst: (a) Hinzufügen von Anatas-kristallinen Titandioxid-Nanoteilchen (a), welche einen durchschnittlichen Teilchendurchmesser von 30 nm bis 100 nm haben; und (b) Hinzufügen von Anatas-kristallinen Titandioxid-Nanoteilchen (b), welche einen durchschnittlichen Teilchendurchmesser von 10 nm bis 25 nm haben.

7. Ein Verfahren zum Herstellen eines porösen Halbleiterelektroden-Substrats, umfassend:
ein leitendes Substrat; und
eine poröse Halbleiterschicht,
wobei das Verfahren umfasst:
Auftragen der viskosen Dispersionsflüssigkeit nach irgendeinem der Ansprüche 1 bis 4 auf das leitende Substrat, und
Trocknen der aufgetragenen viskosen Dispersionsflüssigkeit, um eine poröse Halbleiterschicht zu bilden, welche das leitende Substrat bedeckt.

8. Ein Verfahren zum Herstellen einer Farbstoffsolarzelle, wobei das Verfahren
das Herstellen eines porösen Halbleiterelektroden-Substrats in Übereinstimmung mit Anspruch 7
umfasst.

## Revendications

1. Liquide de dispersion visqueux comprenant :
un milieu de dispersion comprenant de l'eau ; et
des nanoparticules de dioxyde de titane en tant que composant principal de particules semiconductrices contenues dans le liquide de dispersion visqueux ;
dans lequel
le liquide de dispersion visqueux a une concentration en contenu solide de 30 % en masse à 60 % en masse,
les nanoparticules de dioxyde de titane comprennent des nanoparticules de dioxyde de titane sous forme cristalline anatase ayant un diamètre de particule moyen de 10 nm à 100 nm, et des nanoparticules de dioxyde de titane sous forme cristalline brookite ayant un diamètre de particule moyen de 5 nm à 15 nm,
le liquide de dispersion visqueux a une viscosité de 10 Pa.s à 500 Pa.s à 25 °C, et
la quantité de matières organiques ayant un point d'ébullition de 150 °C ou plus à une pression de 1 atm est de 1 % en masse ou moins en termes de contenu solide,
**caractérisé en ce que**
le milieu de dispersion comprend de l'eau en une proportion de 95 % en masse ou plus.

2. Liquide de dispersion visqueux selon la revendication 1, dans lequel les nanoparticules de dioxyde de titane sous forme cristalline anatase comprennent des nanoparticules de dioxyde de titane sous forme cristalline anatase (a) ayant un diamètre de particule moyen de 30 nm à 100 nm.

3. Liquide de dispersion visqueux selon la revendication 2, dans lequel les nanoparticules de dioxyde de titane sous forme cristalline anatase comprennent en outre des nanoparticules de dioxyde de titane sous forme cristalline anatase (b) ayant un diamètre de particule moyen de 10 nm à 25 nm.

4. Liquide de dispersion visqueux selon la revendication 2 ou 3, dans lequel une proportion des nanoparticules de dioxyde de titane sous forme cristalline anatase (a) dans les nanoparticules de dioxyde de titane sous forme cristalline anatase est de 60 % en masse ou plus.

5. Procédé de production du liquide de dispersion visqueux selon la revendication 1, comprenant :
l'ajout de nanoparticules de dioxyde de titane sous forme cristalline anatase à une dispersion aqueuse des nanoparticules de dioxyde de titane sous forme cristalline brookite.

6. Procédé selon la revendication 5, dans lequel l'ajout de nanoparticules de dioxyde de titane sous forme cristalline anatase comprend : (a) l'ajout de nanoparticules de dioxyde de titane sous forme cristalline anatase (a) ayant un diamètre de particule moyen de 30 nm à 100 nm ; et (b) l'ajout de nanoparticules de dioxyde de titane sous forme cristalline anatase (b) ayant un diamètre de particule moyen de 10 nm à 25 nm.

7. Procédé de fabrication d'un substrat d'électrode semi-conducteur poreux comprenant :
un substrat conducteur ; et
une couche semi-conductrice poreuse,
le procédé comprenant :
l'application du liquide de dispersion visqueux selon l'une quelconque des revendications 1 à 4 sur le substrat conducteur, et
le séchage du liquide de dispersion visqueux appliqué pour former une couche semi-conductrice poreuse recouvrant le substrat conducteur.

8. Procédé de fabrication d'une cellule solaire à pigment photosensible, le procédé comprenant
la fabrication d'un substrat d'électrode semi-conducteur poreux selon la revendication 7.
